# DEMANDE DE BREVET EUROPEEN

(11) **EP 4 311 796 A1**
(43) Date de publication de la demande: **31.01.2024**
(21) Numéro de dépôt: 23183120.7
(22) Date de dépôt: 03.07.2023
(51) Int. Cl.: B65G 37/02, B23P 21/00, B67C 7/00, B23P 19/00, B29C 49/42, B29C 49/78, B29L 31/00

(54) **INTERFACE, PROCÉDÉ ET SYSTÈME DE SUPERVISION DE L'APPROVISIONNEMENT EN CONSOMMABLES DE POSTES D'UNE LIGNE DE PRODUCTION**

(30) Priorité: 28.07.2022 FR 2207796
(71) Demandeur: Sidel Participations, 76930 Octeville-sur-Mer (FR)
(72) Inventeur: BRACHET, Vincent, 76930 OCTEVILLE-SUR-MER (FR); CHOMEL, Nicolas, 76930 OCTEVILLE-SUR-MER (FR); WAELDIN, Jean-Claude, 76930 OCTEVILLE-SUR-MER (FR)
(74) Mandataire: Sidel Group

(57) **Abrégé**

La présente invention concerne une interface (5) d'approvisionnement en consommables d'un poste (2) de traitement de produits, avec une entrée (50) accessible à un robot (4) mobile autonome (AMR) transportant un consommable correspondant audit traitement par ledit poste (2) concerné ; des moyens de transfert automatique dudit consommable depuis ledit robot (AMR) vers un espace de réception dudit consommable, ledit espace (20) de réception étant intégré audit poste (2) de traitement, caractérisé en ce que les moyens de transfert comprennent des moyens de chargement automatisé dédiés i) audit consommable à transférer, et ii) à chaque espace (20) de réception des certains postes (2) de traitement à approvisionner avec ledit consommable correspondant.

L'invention concerne aussi une ligne (1) de production dont un certains des postes (2) est équipé d'une telle interface (5), ainsi qu'un procédé de gestion de l'approvisionnement en consommable de cette ligne (1) de production.

L'invention concerne encore un système de supervision de l'approvisionnement en consommable desdits certains postes (2).

## Description

### Domaine technique de l'invention

La présente invention entre dans le domaine des lignes industrielles de production et de fabrication de produits.

Au sens de la présente invention, le terme « produit » englobe un objet individuel. Un tel produit est un récipient, comme une bouteille ou un flacon, ou une brique cartonnée, ou encore une cannette. Un produit peut être en tout type de matériau, notamment en matériau plastique, en métal ou encore en verre. En fonction de sa forme et de son matériau, un produit peut être rigide ou semi-rigide.

Un tel récipient est destiné à contenir, de façon non exhaustive, un fluide, un liquide, des poudres ou des granulés, notamment de type agroalimentaire ou cosmétique.

En outre, un produit peut présenter tout type de forme, symétrique ou non, régulière ou irrégulière. De plus, un produit peut avoir une section arrondie, globalement de forme circulaire ou ovoïdale, ou bien de section polygonale, notamment rectangle ou carrée.

En particulier, un tel récipient comprend un fond pouvant être plat ou sensiblement plat, ou bien, inversement, présentant une ou plusieurs cavités, comme c'est le cas par exemple d'une cannette avec un fond concave ou d'une bouteille avec un fond dit « pétaloïde ».

De manière connue, le long d'une ligne industrielle, les produits peuvent recevoir plusieurs traitements successifs différents, comme la fabrication du contenant, par exemple lors d'une opération d'injection plastique ou d'étirage-soufflage à partir d'une préforme dans le cas d'une bouteille en matériau plastique, suivi du remplissage puis de la fermeture par un bouchon et l'étiquetage. A l'issue de ces traitements, les produits sont dits "finis".

En vue de leur manutention, de tels produits finis subissent ensuite un conditionnement en lot.

En outre, chaque lot comprend un groupe de plusieurs produits, rassemblés selon une disposition en matrice, généralement de forme globalement parallélépipédique, souvent carrée ou rectangle, selon des colonnes et des rangées. A titre d'exemple, un lot habituel regroupe six produits selon deux rangées et trois colonnes.

Une fois les groupes de produits réalisés, chaque groupe peut être conditionné par enrobage ou encaissage.

L'enrobage consiste à entourer ou recouvrir le groupe de produits d'une feuille ou d'un film, afin de maintenir les produits ensemble et de faciliter la manutention d'un tel lot ainsi obtenu. Un tel enrobage peut être effectué au travers d'une étape de filmage ou préférentiellement de fardelage, ou bien par un enrobage au moyen d'une feuille, notamment en matériau papier ou cartonné.

Enfin, les lots sont gerbés ou superposés, en vue de leur transport et de leur stockage, au cours d'une opération de palettisation.

Chaque opération est opérée par un poste dédié au traitement correspondant, le long de ladite ligne de production.

Ceci étant, en vue d'opérer leur traitement, certains postes nécessitent d'être approvisionnés en consommables correspondants, comme par exemple en paillettes de matériaux plastique pour le poste de moulage des préformes, en préformes pour le poste de soufflage ou d'étirage-soufflage d'un récipient plastique, en bouchons pour le poste de fermeture, en rouleaux d'étiquettes pour le poste d'étiquetage, en rouleaux de film plastifié pour le poste de fardelage, en palettes et intercalaires pour le poste de palettisation, ou bien encore en découpes cartonnées pour le poste de formage et d'encaissage, etc.

L'invention vise préférentiellement les consommables liés à l'emballage primaire, à savoir liés à la fabrication des produits finis, comme les préformes, les étiquettes, les bouchons, etc.

De tels consommables sont usuellement amenés depuis une zone de stockage jusqu'aux abords du poste correspondant, où les consommables sont transférés pour approvisionner ledit poste.

### État de la technique

A l'heure actuelle, le transport des consommables depuis la zone de stockage vers le poste correspondant le long de la ligne de production, s'effectue par un chariot, notamment un chariot élévateur.

Généralement, un tel chariot est conduit par un opérateur, mais est automatisé depuis de nombreuses années dans des domaines techniques connexes. Des tels chariots automatiques peuvent être de deux types :
- AGV (ou VGA pour « Véhicule à Guidage automatique »), chariot autonome qui se déplace selon une trajectoire prédéfinie ; et
- AMR (pour « Robot Mobile Autonome), robot qui se déplace librement sous le contrôle d'un logiciel de gestion de la logistique.

Depuis peu, les AVG tendent à être remplacés par les AMR sur la plupart des lignes de fabrication, en raison de leur flexibilité de fonctionnement et de leur polyvalence, ainsi que de leur facilité d'implantation sans modification de l'infrastructure ni l'ajout d'organes d'émission/réception et/ou de contrôle des trajectoires usuellement requis pour les AVG.

Ainsi, de tels robots autonomes permettent d'aller chercher les consommables, pour les amener aux abords dudit poste.

A ce titre, une fois sur place, les consommables, généralement stockés sur une palette, sont déposés aux abords du poste correspondant, puis le robot repart. Les consommables doivent alors être transférés vers ledit poste, opération effectuée manuellement par un opérateur.

De façon connexe, une fois la palette vidée, il convient de l'évacuer.

En dehors de l'aspect fastidieux du transfert, ainsi que des différents consommables qui peuvent s'accumuler aux abords de plusieurs postes consécutifs, par exemple comme c'est le cas pour un module d'embouteillage recevant étiquettes et bouchons, l'accès aux machines dudit poste peut être dangereux en cours de fonctionnement. C'est pour cette raison que les postes ne sont pas directement accessibles, entourés par des enceintes verrouillées, afin de protéger les opérateurs.

Ainsi, lors de l'approvisionnement d'une machine, il est nécessaire de déverrouiller l'enceinte pour y pénétrer en vue d'approvisionner la machine correspondante. Un tel déverrouillage entraîne un ralentissement, mais préférentiellement un arrêt de la machine correspondante, jusqu'à ce que l'opérateur referme l'enceinte une fois l'approvisionnement effectué en consommable.

On comprend aisément la perte de temps et la baisse du rendement de la production, à chaque remplacement de consommables sur un poste.

De surcroît, l'opérateur est souvent obligé d'ouvrir les cartons amenés et déposés à ses pieds, en vue d'accéder aux consommables pour approvisionner la machine. Il en résulte encore une perte de temps conséquente, mais aussi un souci d'approvisionner dans l'ordre les différents consommables déposés auprès d'un même module. En outre, il est difficile pour un opérateur d'opérer manuellement plusieurs chargements, dans un délai imparti, en particulier en raison des manipulations physiquement éreintantes, tout en respectant certains prérequis d'hygiène et de propreté de certains consommable à charger. Il peut en résulter une rupture brutale de production, peu souhaitable pour conserver un rendement optimal.

A ce titre, les cadences élevées d'une ligne de production de récipients, de l'ordre de 60 000 à 120 000 produits par heure, nécessitent un approvisionnement régulier en consommables, surtout de petit format et unitaire, par exemple comme c'est le cas des bouchons. Il n'est pas rare que le long d'une ligne de production, un approvisionnement d'un poste survient toutes les cinq minutes, nécessitant autant d'opérateurs ou leur déplacement le long de la ligne de production pour opérer chaque approvisionnement. La fréquence élevée des chargements implique une organisation rigoureuse de l'approvisionnement et du chargement des consommables, mettant une pression non négligeable sur les opérateurs des équipes en charge de la réalisation de ces tâches. En outre, les opérateurs doivent être formés aux différentes machines de chaque poste, pour assurer l'approvisionnement dans les meilleures conditions, impliquant des contraintes d'organisation en terme de coûts et de sécurité.

Enfin, usuellement, le recours à l'intervention humaine génère des erreurs et de mauvaises manipulations, impactant d'autant le rendement de la production. En outre, la manipulation manuelle est précaire et empirique, très fatigante et contraignante physiquement pour les opérateurs. Même si la manipulation peut être assistée, notamment par un manipulateur robotisé équipé d'un outil de préhension du consommable, le déchargement des consommables en vue de l'approvisionnement de chacun desdits postes reste soumis à l'intervention humaine et les contraintes y relatives.

Par ailleurs, la gestion du transfert des consommables, depuis la zone de stockage vers la ligne de production, en particulier de chaque consommable vers chacun des postes correspondants, est désormais supervisé par un système de gestion. Un tel système reçoit des informations depuis des capteurs présents sur chacun desdits postes, en particulier au niveau d'un espace de réception du consommable, comme un magasin ou réservoir, ledit capteur indiquant le niveau d'utilisation d'un consommable par le poste correspondant. En somme, en deçà d'un seuil, il est nécessaire de prévoir l'approvisionnement du dudit poste en consommable. Le consommable doit donc être déjà présent aux abords du poste à approvisionner, quand le dépassement du seuil survient, afin que l'opérateur puisse préparer puis réaliser l'approvisionnement dans un laps de temps avant épuisement dudit consommable, ce qui entraînerait un arrêt dudit poste.

De ce qui précède, on comprend aisément les problèmes résultants de cette gestion précaire. En outre, le transfert des consommables depuis la zone de stockage nécessite une durée pour effectuer le trajet, aller comme retour, à prendre en considération.

A ce titre, actuellement, un gestionnaire distinct s'occupe de gérer les déplacements des robots (AMR) au sein du site de production, en particulier entre la zone de stockage des consommables et les postes de la ligne de production. Ce gestionnaire permet d'organiser les aller et retour des robots, en fonction des besoins en consommables des postes au cours de la production. Un tel gestionnaire est souvent intégré ou communique avec une suite logicielle de gestion de la ligne de production. Si un tel gestionnaire permet de gérer les déplacements des robots, il reste limité à cette interaction, ne permettant pas de planification optimisée de l'approvisionnement en consommables correspondants des postes concernés.

### Exposé de l'invention

L'invention a pour but de pallier les inconvénients de l'état de la technique en proposant de superviser et d'automatiser l'approvisionnement en consommables correspondant des postes concernés d'une ligne de production, au travers d'une interaction entre des interfaces d'approvisionnement en consommables de certains postes concernés de la ligne de production, un procédé de gestion de l'approvisionnement et un système de supervision des transferts desdits consommables.

Ainsi, en premier lieu, l'invention concerne une interface d'approvisionnement en consommables d'un poste de traitement de produits, comprenant
- une entrée accessible à un robot mobile autonome (AMR) transportant un consommable correspondant audit traitement par ledit poste concerné ;
- des moyens de transfert automatique dudit consommable depuis ledit robot (AMR) vers un espace de réception dudit consommable, ledit espace de réception étant intégré audit poste de traitement.

Une telle interface d'approvisionnement se caractérise en ce que les moyens de transfert comprennent des moyens de chargement automatisé dédiés
i) audit consommable à transférer, et
ii) à chaque espace de réception des certains postes de traitement à approvisionner avec ledit consommable correspondant.

Selon des caractéristiques additionnelles, non limitatives, une telle interface peut comprendre une zone de déchargement pourvue desdits moyens de transfert.

Selon un mode de réalisation, ladite interface comprend une enceinte intégrant ladite entrée communiquant avec ladite zone de déchargement alors située à l'intérieur de l'enceinte, ladite entrée étant accessible par ledit robot (AMR) sur contrôle.

Selon un mode de réalisation, ladite interface des moyens de contrôle de l'accès à l'entrée de ladite enceinte, lesdits moyens de contrôle comprenant des moyens de reconnaissance et communication dudit robot (AMR).

Selon un mode de réalisation, lesdits moyens de chargement comprennent
j) des moyens de prise en charge d'un média de transport du consommable
jj) des moyens d'extraction du consommable depuis ledit media de transport.

L'invention concerne encore une ligne de production de produits de type récipients, pourvue au moins un poste équipé d'une interface d'approvisionnement en consommables d'un poste de traitement selon l'invention.

Une telle ligne de production comprend :
- successivement le long de ladite ligne, plusieurs postes de traitement desdits produits, certains desdits postes de traitement utilisant des consommables, chacun desdits consommables correspondant au traitement desdits produits par un desdits certains postes de traitement concerné ;
- une zone de stockage desdits consommables ;
- des moyens mobiles de transport desdits consommables depuis ladite zone de stockage vers lesdits certains postes de traitement

Ladite ligne de production se caractérise en ce que
- chacun desdits certains postes de traitement est équipé d'une interface d'approvisionnement selon l'invention.

L'invention concerne encore un procédé de gestion de l'approvisionnement en consommables de certains postes de traitement d'une ligne de production selon l'invention.

Un tel procédé de gestion comprend au moins les étapes suivantes, de façon non limitative :
- on commande le transport d'un consommable depuis une zone de stockage vers un des certains postes de traitement ;
- un robot mobile autonome (AMR) transporte ledit consommable depuis la zone de stockage vers ledit des certains postes de traitement ;
- on transfert et on charge ledit consommable depuis ledit robot mobile (AMR) vers ledit espace de réception dudit des certains postes de traitement.

Ledit procédé de gestion se caractérise en ce qu'au cours du transfert,
- ledit robot (AMR) se positionne par rapport à une interface d'approvisionnement équipant ledit parmi les certains postes de traitement,
- on transfert automatiquement ledit consommable depuis ledit robot vers ledit espace de réception, via les moyens de chargement de ladite interface,
- ledit robot repart.

Selon des caractéristiques additionnelles, non limitatives, au cours du transfert,
- ledit robot (AMR) se positionne en pénétrant au sein d'une zone de déchargement accessible via une entrée sécurisée ;
- on contrôle l'accès dudit robot (AMR) par ladite entrée.

Selon un mode de réalisation, on contrôle l'accès dudit robot (AMR) par ladite entrée par reconnaissance et communication depuis ladite interface.

Selon un mode de réalisation, ledit même robot (AMR) repart avec au moins un media de transport vidé du consommable.

Selon un mode de réalisation, on commande le transport dudit consommable de façon automatique via un signal émis par un capteur du niveau de consommation du consommable utilisé au sein dudit espace de réception du poste de traitement concerné.

L'invention concerne aussi un système de supervision de l'approvisionnement en consommables de postes de traitement d'une ligne de production selon l'invention, à savoir au moins un certain des postes est équipé d'une interface selon l'invention, faisant intervenir le procédé de gestion selon l'invention.

Un tel système de supervision est un programme d'ordinateur, à savoir qu'il est exécuté au travers d'au moins un terminal informatique.

Selon l'invention, un tel système de supervision comprend :
- au moins un module logiciel d'assignation de tâches à au moins un robot (AMR), lesdites tâches comprenant au moins le transport de consommables depuis ladite zone de stockage vers lesdits certains postes de traitement, en particulier un desdits consommables correspondant à un desdits certains postes de traitement concerné,
- un module au moins de réception d'un signal de commande de l'approvisionnement dudit consommable correspondant, ledit signal étant émis par ledit poste de traitement concerné.

Ledit système de supervision se caractérise en ce que ledit module d'assignation communique avec ledit module à réception dudit signal, pour initier une desdites tâches consistant au moins en le procédé de gestion selon l'invention.

Selon des caractéristiques additionnelles, non limitatives, ledit module de réception peut permettre la réception d'une notification de fin d'approvisionnement à la fin de ladite une desdites tâches.

Selon un mode de réalisation, ledit système de supervision comprend un module de communication avec un gestionnaire distinct des déplacements dudit au moins un robot (AMR), ledit module de communication et ledit module d'assignation coopérant pour une planification desdites tâches.

Selon un mode de réalisation, lesdites tâches comprennent le transport par ledit au moins un robot (AMR) d'au moins un media de transport vidé de son consommable, depuis un des certains postes de traitement.

Ainsi, au travers d'une interopérabilité entre les objets susmentionnés, l'invention permet d'approvisionner avec le consommable correspondant, directement et automatiquement, chaque poste concerné, au moment le plus optimisé, tout en conservant le rendement maximum de la ligne de production. De surcroît, l'interface permet un chargement sécurisé, directement depuis le robot transportant le consommable, pour automatiquement approvisionner le magasin du poste concerné. En outre, le robot peut repartir directement avec un ou plusieurs supports sur lequel a été livré le consommable, améliorant la sécurité des abords de la ligne de production.

### Présentation des dessins

D'autres caractéristiques et avantages de l'invention ressortiront de la description détaillée qui va suivre des modes de réalisation non limitatifs de l'invention, en référence aux figures annexées, dans lesquelles :

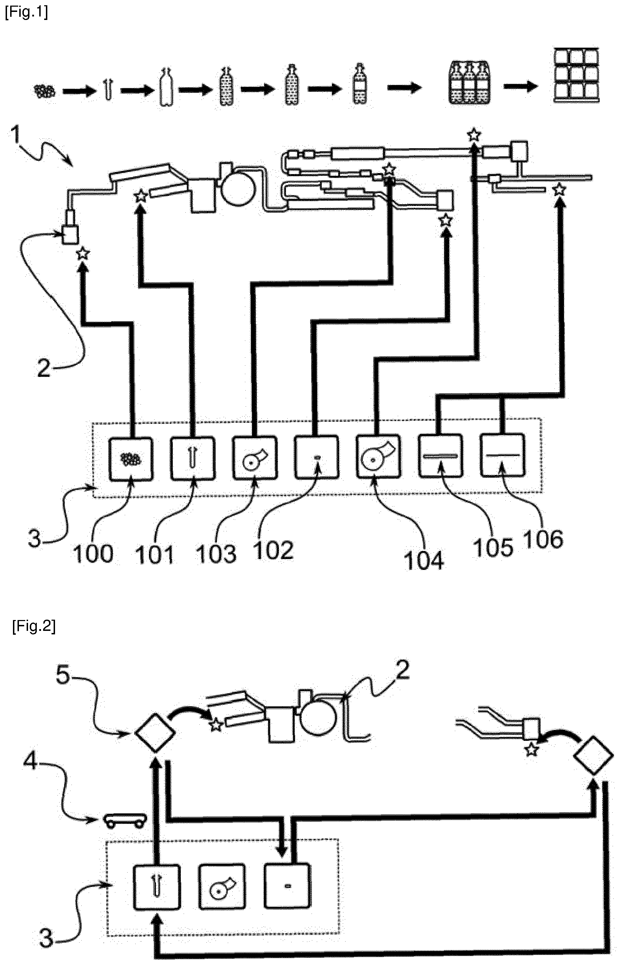

[Fig. 1] représente schématiquement une vue simplifiée de l'architecture d'une ligne de production de produits de type bouteille en plastique, montrant notamment les différents postes à approvisionner avec les consommables correspondants depuis une zone de stockage ;
[Fig. 2] représente schématiquement une vue d'un détail d'une architecture d'une ligne de production selon l'invention, montrant notamment chaque interface d'approvisionnement en consommables de deux postes distincts de la ligne de production, ainsi que le cheminement d'un robot autonome pour transporter lesdits consommables correspondant depuis la zone de stockage vers chacune desdites interfaces desdits deux postes ;

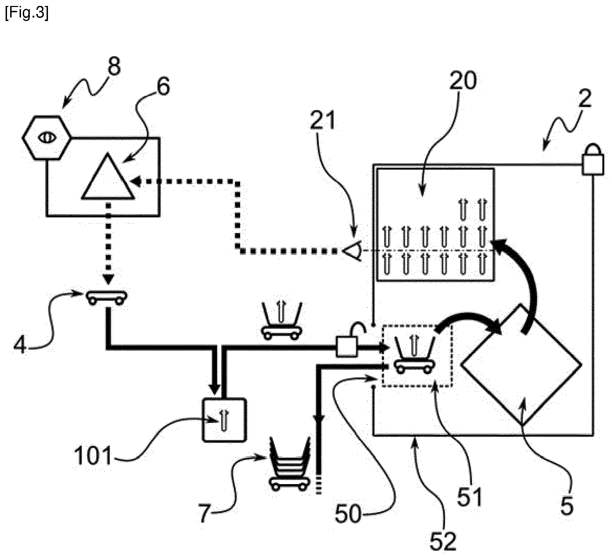

[Fig. 3] représente schématiquement une vue d'un détail d'un mode de réalisation de ladite architecture, montrant notamment le transport par un robot (AMR) sur commande d'un consommable vers un poste de la ligne de production équipé d'un espace de réception et, après contrôle de l'accès audit poste, le transfert dudit consommable par l'interface depuis ledit robot (AMR) situé dans une zone de déchargement vers ledit espace de réception.

### Description détaillée

La présente invention entre dans le domaine des lignes 1 industrielles de production et de fabrication de produits.

L'invention vise spécifiquement une ligne 1 de production de produits, ci-après désignée « ligne 1 de production ».

Comme évoqué précédemment, lesdits produits sont de type récipients, destinés à contenir, de façon non exhaustive, un fluide, un liquide, des poudres ou des granulés, notamment de type agroalimentaire ou cosmétique.

La ligne 1 de production assure plusieurs traitements successifs différents, comme la fabrication du contenant, par exemple lors d'une opération d'injection plastique ou d'étirage-soufflage à partir d'une préforme dans le cas d'une bouteille en matériau plastique, suivi du remplissage puis de la fermeture par un bouchon et l'étiquetage. A l'issue de ces traitements, les produits sont dits "finis". Ces opérations sont effectuées le long d'une partie amont de ladite ligne 1 de production.

Ensuite, la ligne 1 de production comprend une partie aval, le long de laquelle les produits finis sont groupés et conditionnés en vue de leur manutention, au travers d'une opération dite de « packing », puis palettisés en vue de leur transport et leur stockage.

La figure 1 montre différentes étapes des traitements survenant successivement le long d'un exemple de ligne de production de produits de type bouteilles en plastique contenant une boisson, depuis la fabrication des préformes 101 jusqu'à la palettisation.

Pour ce faire, ladite ligne 1 de production comprend successivement le long de ladite ligne 1 de production, plusieurs postes 2 de traitement desdits produits, ci-après désigné « poste 2 » ou « poste 2 de traitement ». Plus avant, certains desdits postes 2 de traitement utilisent des consommables, chacun desdits consommables correspondant au traitement desdits produits par un desdits certains postes 2 concerné.

Comme évoqué précédemment, pour la partie amont de la ligne, les consommables comprennent les paillettes 100 de matériaux plastique pour le poste de moulage des préformes, des préformes 101 pour le poste de soufflage ou d'étirage-soufflage d'un récipient plastique, des bouchons 102 pour le poste de fermeture, des rouleaux 103 d'étiquettes pour le poste d'étiquetage. L'invention vise préférentiellement de tels consommables liés à l'emballage primaire.

La figure 2 montre un exemple de trois consommables primaires, à savoir préforme 101, rouleau d'étiquette 102 et bouchon 103, devant approvisionner plusieurs postes 2 distants le long de la ligne 1 de production.

De façon connexe, l'invention peut englober les consommables utilisés par les postes 2 de la partie aval, comme des rouleaux 104 de film plastifié pour le poste de fardelage, des palettes 105 et des intercalaires 106 pour le poste de palettisation, ou bien encore des découpes cartonnées pour le poste de formage et d'encaissage.

En outre, chaque poste 2 utilisant un consommable comprend un espace 20 de réception. Un tel espace 20 de réception est dédié au consommable utilisé par le poste 2 concerné. Il peut s'agir d'un réservoir ou d'un magasin, au sein duquel le consommable correspondant est introduit pour être utilisé par les machines dudit poste 2 au fur et à mesure du traitement des produits.

Par exemple, pour un consommable comme des préformes 101 ou des bouchons 102, l'espace 20 de réception réciproquement de la souffleuse ou du poste de fermeture peut être une trémie, à l'intérieure de laquelle sont déversés lesdites préformes 101 ou lesdits bouchons 102. Pour une étiqueteuse, l'espace 20 de réception peut être un dévidoir, équipé d'un ou plusieurs mandrins de réception des rouleaux 103 d'étiquettes.

Ceci étant, ladite ligne 1 de production comprend une zone 3 de stockage desdits consommables. Une telle zone 3 de stockage est située sur le site de production, à proximité d'une ou plusieurs lignes 1 de production. Les consommables, ainsi que des pièces de rechange et les produits d'entretien pour les machines y sont emmagasinés et répertoriés, en vue de l'approvisionnement des postes 2 concernés de chacune des lignes 1 de production.

Pour ce faire, ladite ligne 1 de production comprend encore des moyens mobiles de transport desdits consommables depuis ladite zone de stockage vers lesdits certains postes 2.

Au sens de l'invention, de tels moyens mobiles de transport sont entièrement automatisés, étant de deux types, à savoir :
- AGV (ou VGA pour « Véhicule à Guidage automatique ») ; et
- AMR (pour « Robot Mobile Autonome), ci-après désigné « robot 4 ».

Préférentiellement, les moyens mobiles de transport sont des robots 4 de type AMR. En outre, la ligne 1 de production peut intégrer un gestionnaire 6 distinct, dédié à la supervision des déplacements de chacun des robots 4 au sein du site de production comprenant ladite ou plusieurs lignes 1 de production.

Le figure 1 montre notamment en flèches pleines, les déplacements des robots 4 pour approvisionner en consommable depuis la zone 3 de stockage chacun desdits postes 2 concernés de la ligne 1 de production.

En outre, les robots 4 de type AMR peuvent gérer leurs trajectoires de façon autonome et indépendante, après une période d'apprentissage de l'environnement du site de production, évitant les obstacles et le personnel rencontré au cours de leurs déplacements, offrant une sécurité accrue par rapport à un transport commandé par un opérateur, comme par exemple un conducteur de chariot élévateur. Avantageusement, au sein de la ligne 1 de production, chacun desdits certains postes 2 est équipé d'une interface 5 d'approvisionnement en consommable. De plus, chaque interface 5 est dédiée, d'une part audit consommable à transférer, et d'autre part à chaque espace 20 de réception des certains postes 2 à approvisionner avec ledit consommable correspondant.

Plus avant, l'invention vise l'approvisionnement en consommables de certains des postes 2 de ladite ligne 1 de production, à savoir les postes 2 concernés qui utilisent les consommables correspondants au cours des traitements appliqués aux produits. De surcroît, l'invention envisage une automatisation de cet approvisionnement. Une telle automatisation de l'approvisionnement et surtout du chargement des consommables dédiés aux postes correspondantes est une clef pour optimiser la production et limiter les risques d'accident pour les opérateurs, mais aussi de rupture de ladite production.

Pour ce faire, l'invention vise une interface 5 d'approvisionnement en consommables d'un poste 2 de traitement de produits. Comme évoqué précédemment, ladite interface 5 équipe chacun desdits certains postes 2, nécessitant un approvisionnement en consommables correspondants. Dès lors, l'interface 5 est attenante, située à côté ou à proximité du poste 2, notamment en bord de la ligne 1 de production, ou bien intégrée au poste 2.

Une telle interface 5 comprend une entrée 50 accessible à un robot 4 mobile autonome, à savoir un desdits robots 4, transportant un consommable correspondant audit traitement par ledit poste 2 concerné.

Ladite entrée 50 peut être un simple passage, délimité ou non, pour accéder audit poste 2, ou bien une paroi mobile, comme une porte, ménagée dans une enceinte entourant l'interface 5 et/ou ledit poste 2.

De plus, ladite interface 5 comprend des moyens de transfert automatique dudit consommable depuis ledit robot 4 vers l'espace 20 de réception dudit consommable, à savoir ledit espace 20 de réception étant intégré audit poste 2 concerné. En somme, les moyens de transfert permettent de prendre le consommable transporté par le robot 4 et de le déplacer vers le magasin ou le réservoir du poste 2 concerné.

Pour ce faire, avantageusement, les moyens de transfert comprennent des moyens de chargement automatisé dédiés, d'une part audit consommable à transférer, et d'autre part à chaque espace 20 de réception des certains postes 2 à approvisionner avec ledit consommable correspondant.

De tels moyens de chargement peuvent donc être de tout type, conformés et adaptés par rapport au consommable à extraire du robot 4 qui vient de le transporter jusqu'au poste 2, ainsi que par rapport à l'espace 20 de réception au sein duquel le consommable doit être placé.

A titre d'exemple, les moyens de chargement peuvent être des moyens de préhension à l'unité de chaque consommable ou bien simultanément de plusieurs consommables, des moyens de convoyage d'un ou plusieurs consommables, des moyens de déplacement par poussée ou traction horizontalement ou sensiblement horizontale, des moyens de remplissage de plusieurs consommables, notamment par déversement au sein d'une trémie.

En outre, le chargement du consommable peut s'effectuer directement en prenant en charge un ou plusieurs consommables, ou bien indirectement en intervenant sur un média 7 de transport dudit consommable.

Un tel média 7 de transport peut être de tout type, dédié au consommable à transporter. Par exemple, il peut s'agir d'une palette 105 sur laquelle est déposé un ou plusieurs consommables, comme c'est le cas pour des rouleaux 103 d'étiquettes. En outre, le média 7 de transport peut être équipé d'un outillage adapté à la manipulation du consommable, de façon automatique ou assistée pour un opérateur. Concernant des consommables de petites tailles, comme des préformes 101 ou des bouchons 102, il peut s'agir d'une ou plusieurs caisses ou cartons, de sacs ou sachets. Le média 7 de transport peut aussi reposer sur une palette 105 manutentionnée par ledit robot 4.

Avantageusement, étant donné que le transfert s'effectue de façon automatique, les moyens de chargement sont automatisés. De préférence, les moyens de chargement comprennent des moyens robotisés, comme un bras robotisé multi-axe, monté sur la structure de l'interface 5, du poste 2, voire au travers d'un portique adapté.

Selon le mode de réalisation susmentionné, avec un média 7 de transport du ou des consommables, les moyens de chargement sont adaptés pour prendre ledit média 7 et tous les consommables qui s'y trouvent, pour les transférer vers ledit espace 20 de réception du poste 2.

Dès lors, lesdits moyens de chargement comprennent des moyens de prise en charge du média 7 de transport du consommable, ainsi que des moyens d'extraction du consommable depuis ledit media 7 de transport.

Comme évoqué précédemment, l'extraction peut être de tout type lors du chargement de l'espace 20 de réception et les moyens d'extraction sont conformés complémentairement pour manutentionner ledit média 7.

A titre d'exemple, dans le cas d'un média 7 sous forme de caisse, pour un consommable comme des préformes 101 ou des bouchons 102, les moyens de chargement peuvent alors comprendre des moyens de prise en charge par saisie ou préhension d'une ou plusieurs caisse, la soulevant depuis le robot 4 et la déplaçant vers l'espace 20 de réception du poste 2, tandis que des moyens d'extraction par retournement de ladite ou lesdites caisses pour déverser lesdites préformes 101 ou lesdits bouchons 102 dans une trémie équipant le poste 2 ou l'interface 5.

Selon un mode de réalisation, l'interface 5 comprend une zone 51 de déchargement pourvue desdits moyens de transfert. Ladite zone 51 de chargement est dimensionnée pour permettre de recevoir intérieurement ledit robot 4, au moins en partie mais de préférence en entier.

En outre, une telle zone 51 de déchargement peut être délimitée, visuellement par un marquage au sol ou physiquement par des parois, voire encore par des barrières immatérielles délimités virtuellement par des émetteurs/récepteurs ou tout autre moyen adapté.

A ce titre, selon un mode de réalisation, l'interface 5 comprend une enceinte 52 intégrant ladite entrée 50 communiquant ladite zone 51 de déchargement alors située à l'intérieur de l'enceinte 52.

De plus, ladite entrée 50 est accessible par ledit robot 4 sur contrôle, à savoir que l'accès n'est pas libre et soumis à des restrictions d'accès, notamment un verrouillage de l'entrée 50, comme par exemple une fermeture verrouillée et commandée à distance de la porte de ladite entrée 50.

Selon un mode de réalisation complémentaire, l'enceinte 52 est combinée ou fait partie de l'enceinte de sécurité entourant ledit poste 2, en particulier quand l'interface 5 est intégrée audit poste 2.

Selon un mode de réalisation, l'interface 5 comprend des moyens de contrôle de l'accès à l'entrée 50 de ladite enceinte, lesdits moyens de contrôle comprenant des moyens de reconnaissance et de communication dudit robot 4. En somme, c'est l'interface 5 qui intègre un moyen adapté pour distinguer le robot 4 à son approche de l'entrée 50, notamment par l'intermédiaire de moyens de communication entre l'interface 5 et ledit robot 4, ou bien via le gestionnaire 6 des déplacements dudit au moins un robot 4. En somme, en fonction du poste 2 à approvisionner, l'interface 5 peut communiquer à distance pour dialoguer avec ledit robot 4, le gestionnaire 6, ou bien encore un système 8 de supervision (tel que décrit par la suite).

Ainsi, les moyens de déchargement peuvent intervenir pour transférer le consommable depuis le robot 4, dans une zone sécurisée, sans risque pour un opérateur.

En l'état, au moins un des postes 2 concernés de la ligne 1 de production comprend une interface 5 selon l'invention, assurant le transfert et le chargement automatisé du consommable correspondant.

Préférentiellement, chacun des certains desdits postes 2 de la ligne 1 de production comprend une interface 5.

L'invention concerne aussi un procédé de gestion de l'approvisionnement en consommables de certains postes 2 de traitement d'une ligne 1 de production selon l'invention. Un tel procédé de gestion comprend plusieurs étapes, non limitative.

Tout d'abord, on commande le transport d'un consommable depuis une zone 3 de stockage vers un des certains postes 2. En particulier, le consommable correspondant est dédié audit poste 2 concerné.

De plus, un robot 4 mobile autonome transporte ledit consommable depuis la zone 3 de stockage vers ledit des certains postes 2.

Une fois arrivé sur place, on transfert et on charge ledit consommable depuis ledit robot 4 vers ledit espace 20 de réception dudit des certains postes 2. Le transfert et le chargement s'effectue par les moyens de chargement dédiés, avec éventuellement prise en charge du média 7 de transport.

Avantageusement, au cours du transfert, ledit robot 4 se positionne par rapport à une interface 5 d'approvisionnement équipant ledit parmi les certains postes 2 de traitement.

Selon un mode de réalisation, ledit robot 4 se positionne en pénétrant au sein d'une zone 51 de déchargement accessible via une entrée 50 sécurisée et on contrôle l'accès dudit robot 4 par ladite entrée 50, qu'elle soit un passage ou bien une porte. En outre, suivant le mode de réalisation correspondant, on contrôle l'accès dudit robot 4 par ladite entrée 50 par reconnaissance et communication depuis ladite interface 5, à savoir que c'est l'interface 5 qui identifie et autorise le robot 4 à pénétrer dans la zone 51 de déchargement, notamment par une communication directe avec ledit robot 4 ou bien par communication avec le gestionnaire 6 des déplacements dudit robot 4.

La figure 3 montre notamment l'accès sécurisé, avec un contrôle de l'accès à l'entrée sous forme d'un cadenas ouvert, alors que l'enceinte reste fermée (i.e. avec cadenas fermé).

Ensuite, on transfert automatiquement ledit consommable depuis ledit robot 4 vers ledit espace 20 de réception, via les moyens de chargement de ladite interface 5. Une fois le chargement effectué, ledit robot 4 repart.

Usuellement, ledit robot 4 peut repartir à vide, éventuellement avec une palette 105 qui servait de support audit consommable ou à un ou plusieurs média 7 de transport dudit consommable. La figure 2 montre un exemple de robot 4 qui repart à vide après avoir livré des préformes 101 à un poste 2 de soufflage, pour aller chercher des bouchons 103 pour les transporter jusqu'au poste d'embouteillage, notamment à la machine de fermeture, situé en amont de la ligne 1 de production.

Selon un mode de réalisation, ledit même robot 4 repart avec au moins un media 7 de transport vidé du consommable. Ce média 7 peut être celui transporté par ledit robot 4, ou bien un média préalablement pris en charge pour le chargement d'un consommable antérieur. En outre, le robot 4 peut récupérer plusieurs média 7, par exemple gerbés, pour repartir avec vers un emplacement dédié au stockage des média 7 vide, comme ce peut être le cas au sein de la zone 3 de stockage. La figure 3 montre notamment un robot 4 repartant avec plusieurs médias 7 superposés, de type caisse ou bac.

De façon connexe, le robot 4 peut repartir chargé d'autres composants, comme des déchets ou des pièces d'usures, ou encore du matériel nécessaire à l'entretien d'un poste auprès duquel il s'est rendu pour l'approvisionner en consommable. En particulier, le robot 4 peut prendre en charge un ou plusieurs conteneurs à déchets, pour les transporter vers une zone de triage sélectif ou bien au rebut.

Selon un mode de réalisation, on commande le transport dudit consommable de façon automatique via un signal émis par un capteur 21 du niveau de consommation du consommable utilisé au sein dudit espace 20 de réception du poste 2 concerné. En somme, on vérifie en permanence ou à intervalles réguliers le degré d'utilisation du consommable depuis son magasin ou réservoir, puis une fois un seuil bas atteint et détecté, alors on envoie un signal pour commander l'approvisionnement en consommable par un robot 4 qui est situé ou se rend dans la zone 3 de stockage pour le récupérer et le transporter jusqu'au poste 2 en question.

La figure 3 montre notamment en flèches en pointillés, le signal qui sera émis par le capteur 21 quand le niveau de préformes 101 passera sous un certain seuil de détection, avec l'envoi d'une commande vers un robot 4.

On notera que le seuil de consommation est défini notamment en fonction de la durée, ou bien une durée moyenne haute, nécessaire à un robot 4 effectuer le déplacement pour récupérer le consommable à la zone 3 de stockage puis l'amener jusqu'au poste 2, ainsi que le temps nécessaire à son transfert et son chargement, au regard du ratio d'utilisation par ledit poste 2 du consommable en cours d'utilisation.

Ainsi, étant donné que le transfert et le chargement du consommable est automatisé, la commande dudit consommable l'est aussi, sans nécessité l'intervention d'un opérateur pour surveiller le niveau d'utilisation du consommable, ou bien envoyer une commande pour recevoir ledit consommable.

Ainsi, le procédé de gestion selon l'invention assure une tâche d'approvisionnement en consommable d'un poste 2.

En outre, comme évoqué précédemment, la gestion des déplacements du robot 4 peut être opéré par l'intermédiaire du gestionnaire 6 distinct, ou bien combiné à un système global.

Pour ce faire, l'invention concerne encore un système 8 logiciel de supervision de l'approvisionnement en consommables de postes 2 de traitement d'une ligne 1 de production.

Un tel système 8 de supervision est logiciel, sous forme d'un ou plusieurs programmes d'ordinateur, ledit système 8 étant exécuté au travers d'au moins un terminal informatique, comme par exemple un serveur informatique ou un ordinateur. Avantageusement, ledit système 8 de supervision comprend au moins un module logiciel d'assignation de tâches à au moins un robot 4. De plus, lesdites tâches comprennent au moins le transport de consommables depuis ladite zone 3 de stockage vers lesdits certains postes 2, en particulier un desdits consommables correspondant à un desdits certains postes 2 concerné (par exemple, le transport de préformes 101 pour le poste 2 de soufflage).

Le système 8 de supervision comprend aussi un module au moins de réception d'un signal de commande de l'approvisionnement dudit consommable correspondant, ledit signal étant émis par ledit poste 2 concerné. En particulier, il peut s'agir d'un signal émis par le capteur 21, dès détection d'une réserve insuffisante de consommable dans l'espace 20 de réception du poste 2 concerné.

Avantageusement, ledit module d'assignation communique avec ledit module à réception dudit signal, pour initier une desdites tâches consistant au moins en le procédé de gestion selon l'invention. En d'autres termes, à réception du signal indiquant un besoin en consommable, on initie les étapes du procédé de gestion, afin de transporter et de transférer ledit consommable pour approvisionner ledit poste 2 concerné.

Selon un mode de réalisation, ledit module de réception permet la réception d'une notification de fin d'approvisionnement à la fin de ladite une desdites tâches. En somme, le système 8 peut savoir, à réception d'une notification correspondante, quand le robot 4 a livré le consommable qui a été déchargé et est de nouveau disponible, mais aussi quand le chargement de l'espace 20 de réception du poste 2 est terminé. Ainsi la mission est remplie, le système 8 pouvant réaffecter ledit robot 4 pour une nouvelle tâche, comme par exemple la récupération de média 7 vidés et leur transport vers une zone de récupération prévue à cet effet.

Selon un mode de réalisation, ledit système 8 de supervision comprend un module de communication avec le gestionnaire 6 distinct des déplacements dudit au moins un robot 4. De plus, ledit module de communication et ledit module d'assignation coopèrent pour une planification desdites tâches. En d'autres termes, le système 8 de supervision échange avec le gestionnaire 6, voir peut intégrer ledit gestionnaire 6, avec un niveau hiérarchique logiciel plus élevé, afin de recevoir les informations et prendre en considération les déplacements desdits robots 4 dans l'assignation des tâches d'approvisionnement automatique des postes 2 concernés.

Comme évoqué précédemment, selon un mode de réalisation correspondant, lesdites tâches comprennent le transport par ledit au moins un robot 4 d'au moins un media 7 de transport vidé de son consommable, depuis un des certains postes 2. En somme, le système de supervision permet de gérer l'évacuation des médias 7 qui ont servi préalablement au transport des consommables.

Ainsi, l'invention au travers de l'interface 5 dédiée au poste 2 et au consommable à approvisionner, du procédé de gestion pour commander l'approvisionnement et au système logiciel de supervision de l'ensemble, offre une interopérabilité de plusieurs moyens assurant une livraison automatisée et optimisée des consommables à une ou plusieurs lignes 1 de production de récipients.

## Revendications

1. Interface (5) d'approvisionnement en consommables d'un poste (2) de traitement de produits, comprenant :
- une entrée (50) accessible à un robot (4) mobile autonome (AMR) transportant un consommable correspondant audit traitement par ledit poste (2) concerné ;
- des moyens de transfert automatique dudit consommable depuis ledit robot (AMR) vers un espace de réception dudit consommable, ledit espace (20) de réception étant intégré audit poste (2) de traitement,
**caractérisée en ce que**
les moyens de transfert comprennent des moyens de chargement automatisé dédiés
i) audit consommable à transférer,
et
ii) à chaque espace (20) de réception des certains postes (2) de traitement à approvisionner avec ledit consommable correspondant.

2. Interface (5) d'approvisionnement selon la revendication précédente, **caractérisée en ce qu'**elle comprend :
- une zone (51) de déchargement pourvue desdits moyens de transfert.

3. Interface (5) d'approvisionnement selon la revendication précédente, **caractérisée en ce qu'**elle comprend :
- une enceinte (52) intégrant ladite entrée (50) communiquant avec ladite zone (51) de déchargement alors située à l'intérieur de l'enceinte (25),
- ladite entrée (50) étant accessible par ledit robot (4) (AMR) sur contrôle.

4. Interface (5) d'approvisionnement selon la revendication précédente, **caractérisée en ce qu'**elle comprend :
- des moyens de contrôle de l'accès à l'entrée (50) de ladite enceinte (52), lesdits moyens de contrôle comprenant des moyens de reconnaissance et communication dudit robot (4) (AMR).

5. Interface (5) d'approvisionnement selon l'une quelconque des revendications précédentes, **caractérisée en ce que**
- lesdits moyens de chargement comprennent :
j) des moyens de prise en charge d'un média (7) de transport du consommable
jj) des moyens d'extraction du consommable depuis ledit media (7) de transport.

6. Ligne (1) de production de produits de type récipients, comprenant :
- successivement le long de ladite ligne (1), plusieurs postes (2) de traitement desdits produits, certains desdits postes (2) de traitement utilisant des consommables, chacun desdits consommables correspondant au traitement desdits produits par un desdits certains postes (2) de traitement concerné ;
- une zone (3) de stockage desdits consommables ;
- des moyens mobiles de transport desdits consommables depuis ladite zone (3) de stockage vers lesdits certains postes (2) de traitement ;
**caractérisée en ce que**
- chacun desdits certains postes (2) de traitement est équipé d'une interface (5) d'approvisionnement selon l'une quelconque des revendications précédentes.

7. Procédé de gestion de l'approvisionnement en consommables de certains postes (2) de traitement d'une ligne (1) de production selon la revendication précédente, dans lequel :
- on commande le transport d'un consommable depuis une zone 3) de stockage vers un des certains postes (2) de traitement ;
- un robot (4) mobile autonome (AMR) transporte ledit consommable depuis la zone (3) de stockage vers ledit des certains postes (2) de traitement ;
- on transfert et on charge ledit consommable depuis ledit robot (4) mobile (AMR) vers ledit espace (20) de réception dudit des certains postes (2) de traitement ;
**caractérisé en ce que**
au cours du transfert,
- ledit robot (4) (AMR) se positionne par rapport à une interface (5) d'approvisionnement équipant ledit parmi les certains postes (2) de traitement,
- on transfert automatiquement ledit consommable depuis ledit robot (4) (AMR) vers ledit espace (20) de réception, via les moyens de chargement de ladite interface (5),
- ledit robot (4) (AMR) repart.

8. Procédé de gestion selon la revendication précédente, **caractérisé en ce que** au cours du transfert,
- ledit robot (4) (AMR) se positionne en pénétrant au sein d'une zone (51) de déchargement accessible via une entrée (50) sécurisée ;
- on contrôle l'accès dudit robot (4) (AMR) par ladite entrée (50).

9. Procédé de gestion selon la revendication précédente, **caractérisé en ce que**
- on contrôle l'accès dudit robot (4) (AMR) par ladite entrée (50) par reconnaissance et communication depuis ladite interface (5).

10. Procédé de gestion selon l'une quelconques des revendications 8 ou 9, **caractérisé en ce que**
- ledit même robot (4) (AMR) repart avec au moins un media (7) de transport vidé du consommable.

11. Procédé de gestion selon l'une quelconques des revendications 8 à 10, **caractérisé en ce que**
- on commande le transport dudit consommable de façon automatique via un signal émis par un capteur (21) du niveau de consommation du consommable utilisé au sein dudit espace (20) de réception du poste (2) de traitement concerné.

12. Système (8) logiciel de supervision de l'approvisionnement en consommables de postes de traitement d'une ligne (1) de production selon la revendication 6, ledit système (8) logiciel de supervision étant exécuté au travers d'au moins un terminal informatique,
comprenant :
- au moins un module logiciel d'assignation de tâches à au moins un robot (4) (AMR), lesdites tâches comprenant au moins le transport de consommables depuis ladite zone (3) de stockage vers lesdits certains postes (2) de traitement, en particulier un desdits consommables correspondant à un desdits certains postes (2) de traitement concerné,
- un module au moins de réception d'un signal de commande de l'approvisionnement dudit consommable correspondant, ledit signal étant émis par ledit poste (2) de traitement concerné,
**caractérisé en ce que**
- ledit module d'assignation communique avec ledit module à réception dudit signal, pour initier une desdites tâches consistant au moins en le procédé de gestion selon l'une quelconque des revendication 7 à 11.

13. Système logiciel de supervision selon la revendication précédente, **caractérisé en ce que**
- ledit module de réception permet la réception d'une notification de fin d'approvisionnement à la fin de ladite une desdites tâches.

14. Système logiciel de supervision selon la revendication précédente, **caractérisé en ce qu'**il comprend :
- un module de communication avec un gestionnaire (6) distinct des déplacements dudit au moins un robot (4) (AMR),
- ledit module de communication et ledit module d'assignation coopérant pour une planification desdites tâches.

15. Système logiciel de supervision selon l'une quelconque des revendications 12 à 14, **caractérisé en ce que**
- lesdites tâches comprennent le transport par ledit au moins un robot (4) (AMR) d'au moins un media (7) de transport vidé de son consommable, depuis un des certains postes (2) de traitement.
